# EUROPÄISCHE PATENTANMELDUNG

(11) **EP 1 310 390 A2**
(43) Veröffentlichungstag der Anmeldung: **14.05.2003**
(21) Anmeldenummer: 02024007.3
(22) Anmeldetag: 26.10.2002
(51) Int. Cl.: B60H 1/00

(54) **Kühlmittelkreislauf für eine Brennkraftmaschine**

(30) Priorität: 08.11.2001 DE 10154926
(71) Anmelder: DaimlerChrysler AG, 70567 Stuttgart (DE)
(72) Erfinder: Hölle, Michael, 71665 Vaihingen (DE); Kemmler, Roland, 70619 Stuttgart (DE); Rau, Erhard, 73235 Weilheim (DE); Schnüpke, Hubert, 70619 Stuttgart (DE)

(57) **Zusammenfassung**

**Die Erfindung bezieht sich auf** einen Kühlmittelkreislauf 1 für eine Brennkraftmaschine 10 mit einem Kühlmittelkühler 2, mindestens einer mechanischen Kühlmittelpumpe 3 und mindestens einer elektrischen Kühlmittelpumpe 4 für einen einen Kühlmittelzulauf 8 aufweisenden Kühlkreislauf 5 und einen einen Kühlmittelrücklauf 9' aufweisenden Heizkreislauf 5' mit jeweils mindestens einem Wärmetauscher 7, 7', wobei die mechanische Kühlmittelpumpe 3 und/oder die elektrischen Kühlmittelpumpe 4 dem Heiz- und/oder Kühlkreislauf 5', 5 zugeordnet und die mechanische Pumpe zu- und abschaltbar oder drosselbar ist.

## Beschreibung

### Leit-Klasse B 60 H1/ 04

**Die Erfindung bezieht sich auf** einen Kühlmittelkreislauf für eine Brennkraftmaschine mit einem Kühlmittelkühler, mindestens einer mechanischen Kühlmittelpumpe und mindestens einer elektrischen Kühlmittelpumpe für einen einen Kühlmittelzulauf aufweisenden Kühlkreislauf und einen einen Kühlmittelrücklauf aufweisenden Heizkreislauf mit jeweils mindestens einem Wärmetauscher, wobei die mechanische Kühlmittelpumpe und/oder die elektrischen Kühlmittelpumpe dem Heiz- und/oder Kühlkreislauf zugeordnet und die mechanische Pumpe zu- und abschaltbar oder drosselbar ist.

Es ist bereits ein Kühlmittelkreislauf für einen Verbrennungsmotor von Kraftfahrzeugen aus der DE 195 06 935 C1 bekannt, der einen vom Motorkühlkreislauf unabhängigen, mit einer elektrischen Pumpeneinrichtung versehenen Heizkreis aufweist. Die Pumpeneinrichtung ist durch eine elektronische Steueroder Regeleinrichtung für eine Steuerung oder Regelung der Heizleistung des Heizkreises drehzahlgeregelt und/oder getaktet an- und abschaltbar. Hierbei ist ein Kühlmittelzulauf und ein Rücklauf des Heizkreises in einem gemeinsamen direkt an einen Motorblock des Verbrennungsmotors angeordneten Anschlußstutzen integriert.

Der Erfindung liegt die Aufgabe zugrunde, einen Kühlmittelkreislauf derart auszubilden und anzuordnen, daß eine optimale Wärmenutzung unter gleichzeitiger Kraftstoffeinsparung gewährleistet wird.

**Gelöst wird die Aufgabe erfindungsgemäß dadurch, daß** die mechanische Kühlmittelpumpe und/oder die elektrische Kühlmittelpumpe dem Heiz- und/oder Kühlkreislauf zugeordnet und/oder die mechanische Pumpe zu- und abschaltbar ist. Hierdurch wird erreicht, daß je nach Drehzahl des Motors bzw. der mechanischen Kühlmittelpumpe und entsprechend des Bedarfs an Abwärme innerhalb des Kühlkreislaufs bzw. des Heizkreislaufs die elektrische Kühlmittelpumpe ersatzweise oder ergänzend einsetzbar ist. Es ist auch möglich, daß die elektrische Kühlmittelpumpe alternativ zur mechanischen Kühlmittelpumpe sowohl den Kühlkreislauf als auch den Heizkreislauf gewährleistet. Dies gewährleistet eine optimale Aufheizung der Brennkraftmaschine, eine von der Motor-Drehzahl unabhängige Wärmeversorgung der Fahrgastzelle sowie eine damit verbundene Kraftstoffeinsparung.

Hierzu ist es vorteilhaft, daß der Kühlmittelrücklauf des Heizkreislaufs mit dem Kühlmittelzulauf des Kühlkreislaufs in Durchflußverbindung steht und der Kühlmittelkreislauf vom Kühlmittelkühler trennbar ist oder ein vom Kühlmittelkühler getrennter Kurzschluß-Kühlmittelkreislauf zwischen der Brennkraftmaschine, dem Kühlkreislauf und/oder dem Heizkreislauf vorgesehen ist. Somit können beide Kühlmittelströme zusammengeführt werden, wobei die Abwärme des Kühlkreislaufs an den Heizkreislauf abgeführt werden kann, wenn der Kühlmittelkühler vom Kühlmittelkreislauf getrennt ist.

Ferner ist es vorteilhaft, daß der Kühlkreislauf mit dem als Ölkühler ausgebildeten Wärmetauscher, mit der Brennkraftmaschine und/oder mit dem Heizkreislauf und der Heizkreislauf mit dem Heizwärmetauscher, mit der Brennkraftmaschine und/oder mit dem Kühlkreislauf in Durchflußverbindung steht. Dies ermöglicht eine größt mögliche Wärmekompensation zwischen Kühlkreislauf und Heizkreislauf.

Vorteilhaft ist es hierzu auch, daß ein vom Kühlmittelkreislauf oder vom Kurzschluß-Kühlmittelkreislauf getrennter Drosselkreislauf zwischen der elektrischen oder der mechanischen Kühlmittelpumpe, der Brennkraftmaschine und einer steuerbaren bzw. regelbaren Drossel vorgesehen ist. Bei großem Drosselwiderstand kann der Kühlkreislauf auch über die elektrische Kühlmittelpumpe und bei geringem Drosselwiderstand der Heizkreislauf auch über die elektrische Kühlmittelpumpe gewährleistet werden. Beide Kühlmittelkreisläufe stehen somit mit beiden Kühlmittelpumpen in Wirkverbindung.

Gemäß einer bevorzugten Ausführungsform der erfindungsgemäßen Lösung ist schließlich vorgesehen, daß der Kühlkreislauf der Brennkraftmaschine über die mechanische Kühlmittelpumpe und/oder die elektrische Kühlmittelpumpe mit dem als Luftkühler ausgebildeten Kühlmittelkühler und/oder dem Heizkreislauf in Durchflußverbindung steht und daß die mechanische Kühlmittelpumpe, die elektrische Kühlmittelpumpe, der Luftkühler, der Heizwärmetauscher und/oder der Ölkühler über ein Ventil vom Kühlmittelkreislauf zu- und abschaltbar bzw. drosselbar sind.

Im Zusammenhang mit der erfindungsgemäßen Ausbildung und Anordnung ist es von Vorteil, daß das Ventil mindestens einen Kühlmittelzulauf und mindestens einen zu- und abschaltbaren oder drosselbaren Kühlmittelablauf aufweist und dem Ventil ein temperaturabhängiges und/oder regelbares Steuerglied, wie ein Thermostat und/oder ein Regler, zugeordnet ist.

Vorteilhaft ist es ferner, daß die Brennkraftmaschine mindestens einen mit der mechanischen Kühlmittelpumpe und mindestens einen mit der elektrischen Kühlmittelpumpe in Durchflußverbindung stehenden Kühlmittelzulauf und mindestens einen mit der Drossel, mit dem zweiten Wärmetauscher des Heizkreislaufs und mit dem ersten Wärmetauscher des Kühlkreislaufs in Durchflußverbindung stehenden Kühlmittelrücklauf aufweist.

Außerdem ist es vorteilhaft, daß der Drossel ein Stellund/oder Regelglied zugeordnet ist, wobei mindestens ein Kühlmittelablauf des Ölkühlers, mindestens ein Kühlmittelablauf des Heizwärmetauschers, mindestens ein Kühlmittelablauf der Brennkraftmaschine und/oder mindestens ein Kühlmittelaustritt des Luftkühlers einen Temperatursensor aufweist.

Die funktionellen Merkmale der Ventile, deren Anordnung und die Verwendung der Temperatursensoren gewährleisten die Verwendung einer Steuer- und Regeleinrichtung zur optimalen Ausnutzung der vorhandenen und nutzbaren Wärmemengen.

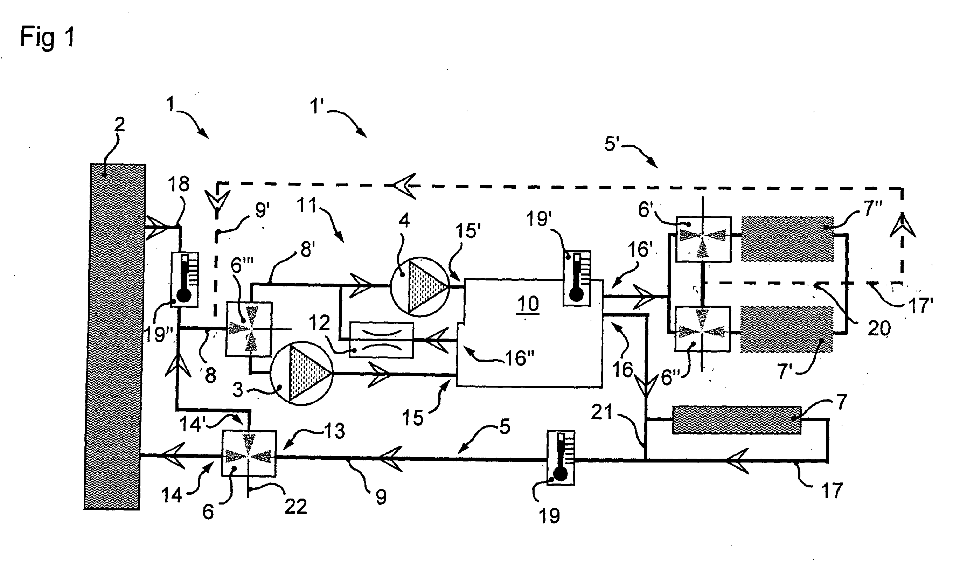

**Weitere Vorteile und Einzelheiten der Erfindung sind in den Patentansprüchen** und in der Beschreibung erläutert und in der Zeichnung dargestellt.

In der Zeichnung ist ein Kühlmittelkreislauf 1 dargestellt, der einen Kühlkreislauf 5 und einen Heizkreislauf 5' aufweist.

Der im Wesentlichen gestrichelt dargestellte Heizkreislauf 5' wird hierbei durch eine Brennkraftmaschine 10 bzw. ihren Kühlmittelablauf 16', zwei Ventile 6', 6'', zwei Heizwärmetauscher 7', 7'', ein Ventil 6''', mindestens eine elektrisch angetriebene Kühlmittelpumpe 4 oder eine mechanisch angetriebene Kühlmittelpumpe 3 und mindestens einen Kühlmittelzulauf 15' gebildet. Der Kühlmittelstrom des Kühlmittelablaufs 16' der Brennkraftmaschine 10 wird in die zwei parallel geschalteten Heizwärmetauscher 7', 7'' aufgeteilt, die über die beiden Ventile 6', 6'' jeweils getrennt von einander zu- und abschaltbar sind. Die Heizwärmetauscher 7', 7'' sind als Nutzwärmetauscher bzw. Lufterhitzer ausgebildet und dienen der Erwärmung der Fahrgastzelle. Neben den beiden Heizwärmetauschern 7', 7'' ist ein Bypass 20 für die beiden Heizwärmetauscher 7', 7'' vorgesehen, der bei entsprechender Stellung der Ventile 6', 6'' bzw. bei gedrosselten oder abgeschalteten Heizwärmetauschern 7', 7'' den auftretenden Kühlmittelstrom weiterleitet. Der Bypass 20 schließt an eine Verbindungsleitung der beiden Ventile 6', 6'' an und verbindet diese mit einem Kühlmittelablauf 17' der beiden Heizwärmetauscher 7', 7''. Beide Heizwärmetauscher 7', 7'' sind über ihr jeweiliges Ventil 6, 6' getrennt regel-, steuer bzw. drosselbar. Über einen Kühlmittelrücklauf 9' des Heizkreislaufs 5' gelangt das Kühlmittel von den beiden Heizwärmetauschern 7', 7'' bzw. dem Bypass 20 in einen Kühlmittelrücklauf 9' des Heizkreislaufs 5' und damit in den Kühlmittelzulauf der mechanischen Kühlmittelpumpe 3 und der elektrischen Kühlmittelpumpe 4, von wo es anschließend über einen Kühlmittelzulauf 15 der Brennkraftmaschine 10 zugeführt wird.

Der Kühlkreislauf 5 wird durch die Brennkraftmaschine 10 bzw. ihren Kühlmittelablauf 16', einen Ölkühler 7, zwei Ventile 6, 6''', die mechanisch angetriebene Kühlmittelpumpe 3 und/oder die elektrische Kühlmittelpumpe 4 und den Kühlmittelzulauf 15 gebildet. Hierbei wird der Kühlmittelstrom eines Kühlmittelablaufs 16 der Brennkraftmaschine 10 aufgeteilt in den Ölkühler 7 und einen parallel geschalteten Bypass 21, wobei der Bypass 21 den Kühlmittelablauf 16 direkt mit einem Kühlmittelrücklauf 9 des Kühlkreislaufs (5) verbindet. Über den am Ölkühler 7 bzw. am Bypass 21 anschließenden Kühlmittelrücklauf 9 gelangt das Kühlmittel in einen Kühlmittelzulauf 13 des Ventils 6. Über einen Kühlmittelzulauf 13 des Ventils 6 wird der auftretende Kühlmittelstrom über einen Kühlmittelablauf 14' des Ventils 6 in den Kühlmittelzulauf 8 der mechanische Kühlmittelpumpe 3 und der elektrischen Kühlmittelpumpe 4 und/oder über einen Kühlmittelablauf 14 des Ventils 6 in einen als Luftkühler ausgebildeten Kühlmittelkühler 2 weitergeleitet. Der Luftkühler 2 ist somit zuschalt-, abschalt- und drosselbar. Bei abgeschaltetem Luftkühler 2 ist der Kühlmittelkreislauf 1 auf einen Kurzschluß-Kühlmittelkreislauf 1' reduziert. Hierbei wird der Kühlmittelstrom über das Ventil 6 direkt dem Kühlmittelzulauf 8 des Ventils 6''' der beiden Kühlmittelpumpen 3, 4 zugeführt. Der Luftkühler 2 weist ebenfalls einen Kühlmittelzulauf sowie einen Kühlmittelaustritt 18 auf, der direkt mit dem Kühlmittelzulauf 8 der mechanischen Kühlmittelpumpe 3 und der elektrischen Kühlmittelpumpe 4 in Durchflussverbindung steht.

Vom Kühlmittelzulauf 8 bzw. Kühlmittelrücklauf 9' aus wird der Kühlmittelstrom über ein weiteres Ventil 6''' auf die mechanische Kühlmittelpumpe 3 und die elektrische Kühlmittelpumpe 4 aufgeteilt und gelangt schließlich zu einem Kühlmittelzulauf 8' des Kühlmittelkreislaufs 5' und zu einem Kühlmittelzulauf 15 des Kühlkreislaufs 5 der Brennkraftmaschine 10.

Die elektrische Kühlmittelpumpe 4 bildet mit einer Drossel 12 und der Brennkraftmaschine 10 einen Drosselkreislauf 11. Hierzu weist die Brennkraftmaschine 10 einen weiteren Kühlmittelablauf 16'' auf, der direkt in die Drossel 12 führt. Nach der Drossel 12 wird der Kühlmittelstrom dem Kühlmittelzulauf 8' bzw. der elektrischen Kühlmittelpumpe 4 zugeleitet. Die Drossel 12 bzw. der Drosselwiderstand ist über ein nicht dargestelltes Stellglied regelbar. Somit kann bei geschlossener Drossel 12 bzw. bei hohem Drosselwiderstand und bei abgeschalteter bzw. getrennter mechanischer Kühlmittelpumpe 3 der Kühlkreislauf 5 über die elektrische Kühlmittelpumpe 4 gewährleistet werden. Im Gegensatz dazu kann bei offener Drossel 12 bzw. bei niedrigem Drosselwiderstand und bei abgeschalteter bzw. getrennter elektrischer Kühlmittelpumpe 4 ein Kühlmittelstrom über den Kühlmittelablauf 16'', den Kühlmittelzulauf 15' der Brennkraftmaschine 10 und schließlich den Kühlmittelablauf 16' die Heizwärmetauscher 7', 7'' des Heizkreislaufs 5' versorgt werden.

Die Ventile 6 sind als Dreiwegeventile mit einem idealisiert dargestellten Stellglied 22 ausgebildet. Sie weisen jeweils einen Kühlmittelzulauf 13 und zwei Kühlmittelabläufe 14, 14' auf, die jeweils stufenlos zu- und abschaltbar bzw. verschließbar sind.

Der Kühlmittelaustritt 18 des Luftkühlers 2, der Kühlmittelrücklauf 9 des Kühlkreislaufs 5 und die Brennkraftmaschine 10 weisen jeweils einen Temperatursensor 19, 19', 19'' auf, die mit der nicht dargestellten Steuer- und Regeleinrichtung des Kühlmittelkreislaufs 1 in Wirkverbindung stehen.

### Bezugszeichenliste

- 1: Kühlmittelkreislauf
- 1': Kurzschluß-Kühlmittelkreislauf
- 2: Kühlmittelkühler, Luftkühler
- 3: mechanische Kühlmittelpumpe, Radialpumpe, Flüssigkeitspumpe
- 4: elektrischen Kühlmittelpumpe
- 5: Kühlkreislauf
- 5': Heizkreislauf
- 6: Ventil
- 6': Ventil
- 6'': Ventil
- 6''': Ventil
- 7: Wärmetauscher, Ölkühler von 5
- 7': Heizwärmetauscher von 5'
- 7'': Heizwärmetauscher von 5'
- 8: Kühlmittelzulauf von 5
- 8': Kühlmittelzulauf von 5'
- 9: Kühlmittelrücklauf von 5
- 9': Kühlmittelrücklauf von 5'
- 10: Brennkraftmaschine
- 11: Drosselkreislauf
- 12: Drossel
- 13: Kühlmittelzulauf von 6
- 14: Kühlmittelablauf von 6
- 14': Kühlmittelablauf von 6
- 15: Kühlmittelzulauf von 10
- 15': Kühlmittelzulauf von 10
- 16: Kühlmittelablauf von 10
- 16': Kühlmittelablauf von 10
- 16'': Kühlmittelablauf von 10
- 17: Kühlmittelablauf von 7
- 17': Kühlmittelablauf von 7'
- 18: Kühlmittelaustritt von 2
- 19: Temperatursensor
- 19': Temperatursensor
- 19'': Temperatursensor
- 20: Bypass von Wärmetauscher 7, 7'
- 21: Bypass von 7
- 22: Stellglied von Ventil 6, 6', 6'', 6'''

## Patentansprüche

1. Kühlmittelkreislauf (1) für eine Brennkraftmaschine (10) mit einem Kühlmittelkühler (2), mindestens einer mechanisch angetriebenen Kühlmittelpumpe (3) und mindestens einer elektrisch angetriebenen Kühlmittelpumpe (4) für einen einen Kühlmittelzulauf (8) und einen Wärmetauscher (7) aufweisenden Kühlkreislauf (5) und einen einen Kühlmittelrücklauf (9') und einen Heizwärmetauscher (7') aufweisenden Heizkreislauf (5'),
**dadurch gekennzeichnet,**
**daß** die mechanische Kühlmittelpumpe (3) und/oder die elektrischen Kühlmittelpumpe (4) dem Heiz- und/oder Kühlkreislauf (5, 5') zugeordnet sind, wobei die mechanische Pumpe zu- und abschaltbar oder drosselbar ist.

2. Vorrichtung nach Anspruch 1,
**dadurch gekennzeichnet,**
**daß** der Kühlmittelrücklauf (9') des Heizkreislaufs (5') mit dem Kühlmittelzulauf (8) des Kühlkreislaufs (5) in Durchflußverbindung steht.

3. Vorrichtung nach Anspruch 1 oder 2,
**dadurch gekennzeichnet,**
**daß** der Kühlmittelkreislauf (1) von dem als Luftkühler ausgebildeten Kühlmittelkühler (2) trennbar ist oder ein vom Kühlmittelkühler (2) getrennter Kurzschluß-Kühlmittelkreislauf (1') zwischen der Brennkraftmaschine (10), dem Kühlkreislauf (5) und/oder dem Heizkreislauf (5') vorgesehen ist.

4. Vorrichtung nach einem der vorhergehenden Ansprüche,
**dadurch gekennzeichnet,**
**daß** der Kühlkreislauf (5) mit dem als Ölkühler ausgebildeten Wärmetauscher (7), mit der Brennkraftmaschine (10) und/oder mit dem Heizkreislauf (5') und der Heizkreislauf (5') mit dem Heizwärmetauscher (7'), mit der Brennkraftmaschine (10) und/oder mit dem Kühlkreislauf (5) in Durchflußverbindung stehen.

5. Vorrichtung nach einem der vorhergehenden Ansprüche,
**dadurch gekennzeichnet,**
**daß** ein vom Kühlmittelkreislauf (1) oder vom Kurzschluß-Kühlmittelkreislauf (1') getrennter Drosselkreislauf (11) zwischen der elektrischen oder der mechanischen Kühlmittelpumpe (4, 3), der Brennkraftmaschine (10) und einer stell- und/oder regelbaren Drossel (12) vorgesehen ist.

6. Vorrichtung nach einem der vorhergehenden Ansprüche,
**dadurch gekennzeichnet,**
**daß** der Kühlkreislauf (5) der Brennkraftmaschine (10) über die mechanische Kühlmittelpumpe (3) und/oder die elektrische Kühlmittelpumpe (4) mit dem Kühlmittelkühler (2) und/oder dem Heizkreislauf (5') in Durchflußverbindung steht.

7. Vorrichtung nach einem der vorhergehenden Ansprüche,
**dadurch gekennzeichnet,**
**daß** die mechanische Kühlmittelpumpe (3), die elektrische Kühlmittelpumpe (4), der Kühlmittelkühler (2), der Ölkühler (7) und/oder mindestens ein Heizwärmetauscher (7') über ein Ventil (6) vom Kühlmittelkreislauf (1) zu- und abschaltbar oder drosselbar sind.

8. Vorrichtung nach einem der vorhergehenden Ansprüche,
**dadurch gekennzeichnet,**
**daß** das Ventil (6) in mindestens einen Kühlmittelzulauf (13) und mindestens einen zu- und abschaltbaren oder drosselbaren Kühlmittelablauf (14) integriert ist und dem Ventil (6) ein temperaturabhängiges und/oder regelbares Steuerglied, wie ein Thermostat und/oder ein Regler, zugeordnet ist.

9. Vorrichtung nach einem der vorhergehenden Ansprüche,
**dadurch gekennzeichnet,**
**daß** die Brennkraftmaschine (10) mindestens je einen mit der mechanischen Kühlmittelpumpe (3) und mit der elektrischen Kühlmittelpumpe (4) in Durchflußverbindung stehenden Kühlmittelzulauf (15, 15') und mindestens je einen mit der Drossel (12), dem Heizwärmetauscher (7') des Heizkreislaufs (5') und dem Ölkühler (7) des Kühlkreislaufs (5) in Durchflußverbindung stehenden Kühlmittelablauf (16, 16', 16'') aufweist.

10. Vorrichtung nach einem der vorhergehenden Ansprüche,
**dadurch gekennzeichnet,**
**daß** der Drossel (12) ein Stell- und/oder ein Regelglied zugeordnet ist, wobei mindestens ein Kühlmittelablauf (17) des Ölkühlers (7), mindestens ein Kühlmittelablauf (17') des Heizwärmetauschers (7'), mindestens ein Kühlmittelablauf (16') der Brennkraftmaschine (10) und/oder mindestens ein Kühlmittelaustritt (18) des Kühlmittelkühlers (2) einen Temperatursensor (19) aufweist.
